# EUROPÄISCHE PATENTSCHRIFT

(11) **EP 1 065 522 B1**
(45) Veröffentlichungstag und Bekanntmachung des Hinweises auf die Patenterteilung: **06.04.2005**
(21) Anmeldenummer: 00113254.7
(22) Anmeldetag: 21.06.2000
(51) Int. Cl.: G01S 17/02, G01S 17/89

(54) **Optoelektronisches Überwachungssystem**
Optoelectronic surveillance system
Système de surveillance optoélectronique

(30) Priorität: 30.06.1999 DE 29911391 U
(43) Veröffentlichungstag der Anmeldung: 03.01.2001
(73) Patentinhaber: Sick AG, 79183 Waldkirch, Breisgau (DE)
(72) Erfinder: Bauer, Robert Dr., 79312 Emmendingen (DE); Wüstefeld, Martin, 79350 Sexau (DE)
(74) Vertreter: Manitz, Finsterwald & Partner GbR

(56) Entgegenhaltungen:
- EP-A- 0 701 145
- EP-A- 0 902 402
- DE-A- 3 915 627
- DE-A- 19 757 595
- US-A- 4 915 498
- US-A- 5 682 229
- US-A- 5 889 582

## Beschreibung

Die Erfindung betrifft ein optoelektronisches Überwachungssystem zur Erfassung eines zu überwachenden Raumbereichs.

In sicherheitsrelevanten Räumlichkeiten ist es häufig wünschenswert, kontrollieren zu können, ob sich in einem bestimmten Flächen- oder Raumbereich, Personen oder sonstige Objekte aufhalten bzw. sich in einer gewünschten Position befinden. Solche sicherheitsrelevanten Flächenund Raumbereiche können z.B. Durchgänge, Durchfahrten, Aufzugsräume oder Eingangsbereiche sein.

Es ist grundsätzlich bekannt, zu derartigen Kontroll- oder Sicherungszwecken automatische Sensorsysteme zu verwenden, die jedoch meist mit einer aufwendigen Installation verbunden sind und die Anwesenheit von Personen oder Gegenständen in dem zu überwachenden Raumbereich nicht immer zuverlässig erfassen.

Herkömmliche Überwachungsvorrichtungen, wie sie z.B. aus der Offenlegungsschrift DE 195 25 875 A1 oder EP 0 902 402 A2 bekannt sind, arbeiten nach einem einfachen Vergleichsprinzip, bei dem ein aktuell empfangenes Bild mit einem zuvor aufgenommenen Referenzbild verglichen wird, um etwaige Abweichungen zwischen den Bildern festzustellen. Solche herkömmlichen Überwachungsvorrichtungen haben den Nachteil, daß sie z.B. flach auf dem Boden liegende Gegenstände oder Objekte mit konturschwacher Oberfläche schlecht oder gar nicht erfassen, da solche Objekte nur geringfügige Abweichungen zwischen dem aktuellen Bild und dem Referenzbild verursachen. Ferner sind solche Überwachungsvorrichtungen gegenüber Verschmutzungen des zu überwachenden Raumbereichs empfindlich, was dazu führen kann, daß die Überwachungsfunktion solcher Vorrichtungen völlig versagt.

Es ist ein Ziel der vorliegenden Erfindung ein Überwachungssystem zu schaffen, das problemfrei an die praktischen Gegebenheiten anpaßbar und leicht zu installieren ist. Weiterhin ist es ein Ziel der Erfindung, ein universell einsetzbares Kontroll- und Überwachungssystem zu schaffen, das seinen Sicherungszweck mit hoher Zuverlässigkeit erfüllt.

Zur Lösung dieser Aufgaben wird nach der vorliegenden Erfindung ein optoelektronisches Überwachungssystem mit den in Anspruch 1 angegebenen Merkmalen vorgeschlagen.

Mit Hilfe eines optoelektronischen Überwachungssystems gemäß der vorliegenden Erfindung können auch kleine oder ebene, flach auf dem Boden des zu überwachenden Raumbereichs liegende Gegenstände und Objekte mit konturschwachen Oberflächen zuverlässig erfaßt werden. Dazu werden durch die Beleuchtungseinrichtung Lichtimpulse erzeugt und in unterschiedliche Bereiche des zu überwachenden Raumbereichs abgestrahlt. Die Lichtstrahlen werden vom Boden und den Seitenwänden des zu überwachenden Raumbereichs oder den Objekten, die sich in dem zu überwachenden Raum befinden, reflektiert und vom Bildgeber erfaßt. Das erfindungsgemäße optoelektronische Überwachungssystem verfügt über eine Zeitmeßeinheit, welche die Laufzeit jedes Lichtimpulses von der Aussendung durch die Beleuchtungseinrichtung bis zum Empfang durch den Bildgeber für mindestens einen Bildpunkt ermittelt und mit einem diesem Bildpunkt zugeordneten, vorher festgelegten Referenzwert vergleicht. Eine Abweichung der aktuellen Lichtlaufzeit gegenüber dem Referenzwert ist ein zuverlässiger Indikator dafür, daß sich in dem zu überwachenden Raumbereich neue Objekte befinden oder sich die Position bereits vorhandener Objekte verändert hat. Jeder Referenzwert ist jeweils auf einen bestimmten Sollzustand im überwachten Raumbereich abgestimmt.

Das optoelektronische Überwachungssystem gemäß der Erfindung hat den Vorteil, daß damit Objekte unabhängig von ihrer Größe und Oberflächenbeschaffenheit zuverlässiger erfaßt werden können und somit der Überwachungsbereich besser kontrolliert werden kann. Das erfindungsgemäße Überwachungssystem bietet ferner die Möglichkeit, festzustellen, ob die in dem zu überwachenden Raumbereich befindlichen Objekte eine vorgegebene Position einnehmen und/oder diese Position beibehalten, was nachfolgend näher erläutert wird.

Da die Lichtimpulse, deren Lichtlaufzeiten ermittelt werden, den gesamten zu überwachenden Raum erfassen, kann mittels des optoelektronischen Überwachungssystems nach der vorliegenden Erfindung nicht nur der Boden oder der bodennahe Bereich, sondern der gesamte Raum überwacht werden. Darüberhinaus ist ein optoelektronisches Überwachungssystem nach der vorliegenden Erfindung gegenüber Verschmutzungen oder sonstigen Veränderungen des zu überwachenden Raumbereichs unempfindlich, da diese die Ermittlung der Lichtlaufzeiten nicht beeinträchtigen.

Die für den Vergleich der Lichtlaufzeiten erforderlichen Referenzwerte können erzeugt werden, indem die Zeitmeßeinheit die Laufzeit der Lichtimpulse von der Aussendung durch die Beleuchtungseinrichtung bis zum Empfang durch den Bildgeber für mindestens einen Bildpunkt ermittelt, wobei der zu überwachende Raumbereich frei ist. Die so ermittelten Referenzwerte werden für jeden Bildpunkt in einem geeigneten Speicher abgelegt, so daß sie für einen späteren Vergleich mit aktuell ermittelten Lichtlaufzeiten abrufbar sind. Falls beim Vergleich der so ermittelten Referenzwerte mit aktuell ermittelten Lichtlaufzeiten eine Abweichung festgestellt wird, so ist dies ein zuverlässiger Hinweis darauf, daß der zu überwachende Raumbereich nicht mehr frei ist, sondern sich Objekte darin befinden, woraufhin das Überwachungssystem ein entsprechendes Überwachungssignal ausgeben kann. Somit kann auf zuverlässige Weise festgestellt werden, ob der zu überwachende Raumbereich frei ist oder nicht.

Die für den Vergleich der Lichtlaufzeiten erforderlichen Referenzwerte können auch erzeugt werden, indem die Zeitmeßeinheit die Laufzeit der Lichtimpulse für mindestens einen Bildpunkt ermittelt, während sich in dem zu überwachenden Raumbereich Objekte befinden und eine vorgegebene Position einnehmen. Die so ermittelten Referenzwerte werden wiederum in einem geeigneten Speicher für jeden einzelnen Bildpunkt abgelegt und sind für einen späteren Vergleich mit aktuell ermittelten Lichtlaufzeiten abrufbar. Falls der Vergleich der so ermittelten Referenzwerte mit den aktuell ermittelten Lichtlaufzeiten eine Abweichung ergibt, so ist dies ein zuverlässiger Hinweis darauf, daß die in dem zu überwachenden Raumbereich befindlichen Objekte ihre vorgegebene Position verändert haben. Dadurch ist es mittels des erfindungsgemäßen optoelektronischen Überwachungssystems möglich, eine Überwachung der Position von Personen oder Gegenständen durchzuführen und damit die Einhaltung von Sicherheitsbedingungen zu kontrollieren, was beispielsweise beim Transport von Personen oder Gütern in Aufzügen, Fahrzeugen oder sonstigen Transportmitteln vorteilhafte Anwendung finden kann.

Das optoelektronische Überwachungssystem gemäß der vorliegenden Erfindung hat ferner den Vorteil, daß zwischen der Beleuchtungseinrichtung und dem Bildgeber kein Winkel vorhanden sein muß, d.h. daß die Beleuchtungseinrichtung sehr nahe dem Bildgeber angebracht oder mit diesen in einem Gehäuse untergebracht sein kann.

Das optoelektronische Überwachungssystem arbeitet gemäß der vorliegenden Erfindung besonders effizient, da der Pulsbetrieb der Beleuchtungseinrichtung mit dem Bildgeber synchronisiert ist. Dabei nimmt der Bildgeber nur dann ein Reflexionsbild vom zu überwachenden Raumbereich auf, wenn die Beleuchtungseinrichtung aktiviert ist und einen kurzen Lichtimpuls aussendet. Die Synchronisation des Pulsbetriebes der Beleuchtungseinrichtung mit dem Bildgeber ist ebenfalls eine geeignete Maßnahme die zu verarbeitende Datenmenge zu reduzieren. Darüberhinaus erleichtert der synchronisierte Pulsbetrieb die Ermittlung der Lichtlaufzeiten für die einzelnen Bildpunkte des vom Bildgeber erfaßten Bildes.

In den Unteransprüchen sind weitere vorteilhafte Ausführungsformen des optoelektronischen Überwachungssystems gemäß der vorliegenden Erfindung angegeben.

Nach einer bevorzugten Ausführungsform der Erfindung wird die Laufzeit jedes Lichtimpulses von der Aussendung durch die Beleuchtungseinrichtung bis zum Empfang durch den Bildgeber für jeden Bildpunkt ermittelt, um so ein Laufzeitprofil des gesamten zu überwachenden Raumbereichs zu erhalten. Dadurch ergibt sich in Abhängigkeit von der Kontur der zu überwachenden Fläche für jeden Bildpunkt (Pixel) des Bildgebers ein eigener Laufweg der Lichtstrahlen. Ein solches Laufzeitprofil kann bei freien Überwachungsbereich eingelesen und als Referenzbild in einem geeigneten Speicher gespeichert werden. Dringt nun ein Objekt in den Überwachungsbereich ein, verändert sich dieses Laufzeitprofil, und durch den Vergleich mit dem Referenzbild kann das Objekt sicher detektiert werden.

Nach einer weiteren vorteilhaften Ausführungsform kann die Beleuchtungseinrichtung des erfindungsgemäßen Überwachungssystems als Laserlichtquelle ausgeführt sein, die einen wenige Millimeter breiten Lichtstrahl erzeugt. Die Verwendung einer Laserlichtquelle als Beleuchtungseinrichtung ermöglicht eine besonders zuverlässige Ermittlung der Lichtlaufzeiten, da Laserlicht auch von konturschwachen Oberflächen deutlich detektierbar reflektiert wird.

Nach einem weiteren Aspekt der vorliegenden Erfindung wird der von der Beleuchtungseinrichtung erzeugte Lichtstrahl durch eine optische Ablenkeinheit insbesondere periodisch abgelenkt. Mit Hilfe der optischen Ablenkeinheit kann der Lichtstrahl auf beliebige Weise abgelenkt werden, um den Lichtstrahl in einer beliebigen Weise zweidimensional abzulenken und damit den gesamten zu überwachenden Raumbereich zu überstreichen.

Die optische Ablenkeinheit wird vorzugsweise derart gesteuert, daß sie den von der Beleuchtungseinrichtung erzeugten Lichtstrahl in zwei zueinander senkrecht stehenden Ebenen ablenkt. Auf diese Weise kann der zu überwachende Raumbereich beispielsweise mit einem Bündel von mehreren parallel zueinander verlaufenden Linien oder einem Liniengitter beleuchtet werden. Eine solche Ausleuchtung des zu überwachenden Raumbereichs ist besonders vorteilhaft, weil dadurch ein bestimmtes Beleuchtungsmuster erzeugt werden kann, so daß Abweichungen davon, die durch in dem zu überwachenden Raumbereich vorhandene Objekte verursacht werden, besonders leicht zu detektieren sind.

Bei bestimmten Anwendungen des erfindungsgemäßen Überwachungssystems kann es wünschenswert sein, daß die Beleuchtungseinrichtung den zu überwachenden Raum nur in einem bestimmten Raumwinkelbereich beleuchtet. Mittels der optischen Ablenkeinheit oder durch Einsatz von geeigneten Blenden kann dann der von der Beleuchtungseinrichtung erzeugte Lichtstrahl derart manipuliert werden, daß ausschließlich der interessierende Raumwinkelbereich beleuchtet wird. Dadurch können Raumbereiche, die keiner Kontrolle durch das Überwachungssystem unterzogen werden sollen, außer acht gelassen werden. Durch die Beschränkung der Beleuchtungseinrichtung auf einen bestimmten Raumwinkelbereich kann ferner die Anzahl der Bildpunkte, für welche die Lichtlaufzeiten zu ermitteln sind, reduziert und damit die zu verarbeitende Datenmenge reduziert werden.

Nach einem weiteren Aspekt der vorliegenden Erfindung kann der Bildgeber des Überwachungssystems mit einem optischen Bandpaßfilter versehen sein, der auf die Wellenlänge des von der Beleuchtungseinrichtung erzeugten Lichtes abgestimmt ist. Damit ist gewährleistet, daß der Bildgeber ausschließlich Licht empfängt, das von der Beleuchtungseinrichtung stammt. Insbesondere bei der Verwendung einer Laserlichtquelle als Beleuchtungseinrichtung kann ein optischer Bandpaßfilter vorgesehen werden, der das Licht nur in einem besonders engen Wellenlängenbereich passieren läßt, in dem auch die Wellenlänge des von der Laserlichtquelle erzeugten Lichts liegt. Der Einsatz eines optischen Bandpaßfilters macht das optoelektronische Überwachungssystem nach der vorliegenden Erfindung besonders unempfindlich gegenüber Fremdlicht, Interferenzerscheinungen oder anderen störenden Lichteinflüssen.

Das optoelektronische Überwachungssystem funktioniert in einer weiteren Ausführungsform der vorliegenden Erfindung besonders zuverlässig, wenn als Bildgeber eine digitale Kamera verwendet wird, die eine Anzahl von in einer Matrix angeordneten Halbleitersensoren, wie z.B. Photodioden-, CCD- (charge coupled device) oder CID- (charge injection device) Matrizen aufweist. Durch die Verwendung derartiger Kameras als Bildgeber wird die Ermittlung der Lichtlaufzeiten für die einzelnen Bildpunkte erleichtert. Darüberhinaus kann durch den Einsatz einer digitalen Kamera Abweichungen zwischen den Lichtlaufzeiten des Referenzbildes und den aktuell ermittelten Lichtlaufzeiten aufgrund von Veränderungen im zu überwachenden Raumbereich besonders leicht detektiert werden, wie nachfolgend beschrieben wird.

Die in den zu überwachenden Raum abgestrahlten Lichtimpulse werden reflektiert und erzeugen in der digitalen Kamera auf der Matrix der flächig angeordneten Halbleitersensoren ein bestimmtes Reflexionsbild, wobei die Laufzeiten der Lichtimpulse vorzugsweise für jeden einzelnen Bildpunkt ermittelt werden. Die so ermittelten Lichtlaufzeiten des aktuell empfangenen Bildes werden mit den zuvor ermittelten Lichtlaufzeiten eines gespeicherten Referenzbildes verglichen und auf Abweichungen hin überprüft. Dieser Vergleich kann für jeden einzelnen Bildpunkt (pixelweise) erfolgen oder für ein Anzahl von zusammengefaßten Bildpunkten, in dem die Summe der Lichtlaufzeiten eine Anzahl von benachbarten Bildpunkten des aktuell empfangenen Bildes addiert und mit der Summe der Lichtlaufzeiten für die entsprechenden Bildpunkte des Referenzbildes verglichen werden.

Um geringfügige Abweichungen der Lichtlaufzeiten zwischen dem aktuell empfangenen Bild und dem Referenzbild durch unwesentliche Veränderungen des zu überwachenden Raumbereichs zu vernachlässigen, kann der Vergleich der Lichtlaufzeiten des aktuell empfangenen Bildes mit den Lichtlaufzeiten des Referenzbildes auch nur auf bestimmte Bildpunkte beschränkt werden. Insbesondere wenn die Beleuchtungseinrichtung ein bestimmtes Beleuchtungsmuster ausstrahlt, wie oben beschrieben, kann der Vergleich der Lichtlaufzeiten auf diejenigen Bildpunkte beschränkt werden, die durch das bestimmte Beleuchtungsmuster erfaßt werden.

Eine weitere Möglichkeit, die Empfindlichkeit des erfindungsgemäßen optoelektronischen Überwachungssystems einzustellen und damit Fehlinterpretationen zu vermeiden, besteht darin, der Zeitmeßeinheit einen Toleranzbereich für die Ermittlung der Abweichung zwischen den Lichtlaufzeiten des aktuell empfangenen Bildes und den Lichtlaufzeiten des Referenzbildes zugrundezulegen, so daß das Überwachungssystem nur dann ein entsprechendes Überwachungssignal ausgibt, wenn dieser Toleranzbereich überschritten ist.

Das optoelektronische Überwachungssystem gemäß der Erfindung erlaubt das Aufnehmen und Speichern von Referenzwerten der Laufzeiten der Lichtimpulse in beliebigen Situationen. Vorzugsweise werden die Laufzeiten von der Aussendung bis zum Empfang der Lichtimpulse bei freiem zu überwachenden Raumbereich ermittelt und in einem geeigneten Speicher gespeichert. Eine Abweichung zwischen derart ermittelten Referenzwerten und aktuell ermittelten Lichtlaufzeiten ist dann ein sicherer Hinweis darauf, daß sich Objekte in dem zu überwachenden Raumbereich befinden.

Alternativ kann die Ermittlung und Speicherung der Laufzeiten von der Aussendung bis zum Empfang der Lichtimpulse als Referenzwerte vorgenommen werden, wenn die in dem zu überwachenden Raumbereich befindlichen Objekte eine vorgegebene Position einnehmen. Eine Abweichung zwischen derart ermittelten Referenzwerten und aktuell ermittelten Lichtlaufzeiten ist ein Hinweis darauf, daß die in dem zu überwachenden Raumbereich befindlichen Objekte ihre vorgegebene Position verändert haben.

Nach einer weiteren vorteilhaften Ausführungsform kann der Bildgeber und Beleuchtungseinrichtung des erfindungsgemäßen optoelektronischen Überwachungssystems in derselben Richtung auf den zu überwachenden Raumbereich ausgerichtet sein. Diese Möglichkeit ergibt sich daraus, daß für die Ermittlung der Lichtlaufzeiten zwischen der Beleuchtungseinrichtung und dem Bildgeber kein Winkel vorhanden sein muß, da die Anwesenheit von Objekten in dem zu überwachenden Raumbereich oder die Veränderung ihrer Position jedenfalls eine Veränderung der Lichtlaufzeiten verursacht unabhängig davon, in welchem Winkelverhältnis die Beleuchtungseinrichtung und der Bildgeber zueinander angeordnet sind.

Da die Beleuchtungseinrichtung und der Bildgeber des erfindungsgemäßen optoelektronischen Überwachungssystems in derselben Richtung auf den zu überwachenden Raumbereich ausgerichtet sein können, ist nach einer weiteren bevorzugten Ausführungsform vorgesehen, daß die Beleuchtungseinrichtung und der Bildgeber gemeinsam in einem Gehäuse untergebracht sind. Dadurch wird das erfindungsgemäße optoelektronische Überwachungssystem insgesamt kompakter, da die Beleuchtungseinrichtung und der Bildgeber nicht separat voneinander montiert werden müssen, was die Installation des Überwachungssystem erheblich vereinfacht und Verbindungsleitungen zwischen der Beleuchtungseinrichtung und dem Bildgeber überflüssig macht.

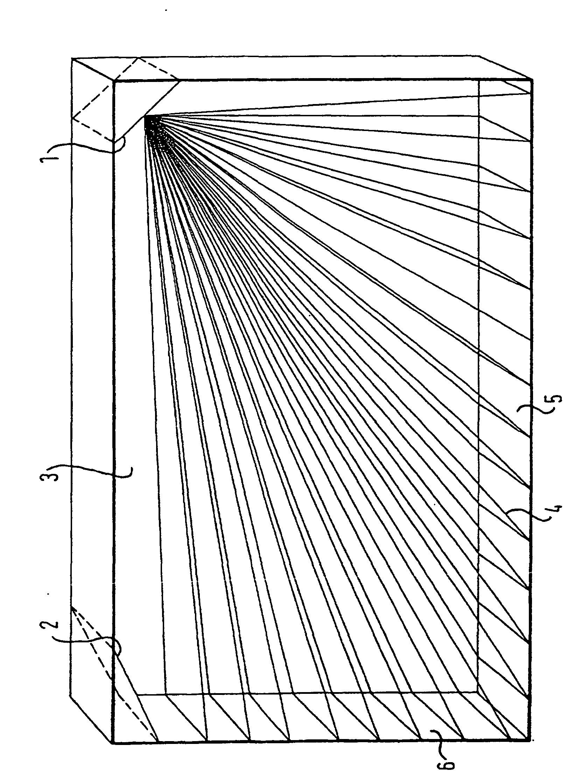

Nachfolgend wird ein optoelektronisches Überwachungssystem gemäß der vorliegenden Erfindung rein beispielhaft anhand der beiliegenden Zeichnung erläutert. In der Zeichnung ist ein optoelektronisches Überwachungssystem gemäß der vorliegenden Erfindung in einer bevorzugten Ausführungsform räumlich dargestellt.

Die Zeichnung zeigt einen zu überwachenden Raumbereich 3, in dessen Deckenbereich eine Beleuchtungseinrichtung 1 sowie ein Bildgeber 2 installiert sind. In dem dargestellten Beispiel ist der Bildgeber in dem Dekkenbereich gegenüber der Beleuchtungseinrichtung 1 angeordnet. Die Beleuchtungseinrichtung 1 und der Bildgeber 2 können jedoch auch in einer anderen Position zueinander angeordnet werden.

Die Beleuchtungseinrichtung 1 erzeugt Lichtimpulse, die in den zu überwachenden Raumbereich 3 abgestrahlt werden. In der dargestellten Ausführungsform kann es sich bei der Beleuchtungseinrichtung 1 um eine Laserlichtquelle handeln, die einen wenige Millimeter breiten Lichtstrahl erzeugt. Die im Pulsbetrieb ausgestrahlten Lichtstrahlen können vorzugsweise durch eine optische Ablenkeinheit (nicht gezeigt) insbesondere in zwei zueinander senkrecht stehenden Ebenen abgelenkt werden, so daß sie den zu überwachenden Raumbereich 3 linienförmig überstreichen. Auf diese Weise wird der zu überwachende Raumbereich 3 während eines Lichtimpulses mit einem Bündel von Lichtstrahlen beleuchtet, die auf den Boden 5 und die Seitenwände 6 des überwachenden Raumbereichs 3 oder darin befindliche Objekte (nicht dargestellt) eine Anzahl von wenige Millimeter breiten Linien projizieren.

Bei diesem Ausführungsbeispiel ist die Beleuchtung derart, daß sie den zu überwachenden Raumbereich 3 möglichst vollständig ausfüllt und auf den Boden 5 sowie die Seitenwände 6 des überwachenden Raumbereichs 3 gerade, zueinander parallel verlaufende Linien projiziert. Die Beleuchtungseinrichtung 1 kann jedoch auch so eingestellt sein, daß sie ein anderes beliebiges zweidimensionales Projektionsbild erzeugt oder nur einen bestimmten Raumwinkelbereich innerhalb des zu überwachenden Raumes 3 beleuchtet. In dem dargestellten Fall ist der zu überwachende Raumbereich 3 frei, so daß das Strahlenbündel ungehindert auf den Boden 5 und die Seitenwand 6 des überwachenden Raumbereichs 3 projiziert wird.

Die in den zu überwachenden Raumbereich 3 abgestrahlten Lichtimpulse werden vom Boden 5 und den Seitenwänden 6 des zu überwachenden Raumbereichs 3 oder von darin befindlichen Objekten reflektiert und vom Bildgeber 2 erfaßt, der dabei ein in eine Anzahl von in einer Fläche angeordneten Bildpunkten aufgelöstes Bild erfaßt. Eine Zeitmeßeinheit (nicht gezeigt) ermittelt die Laufzeit der Lichtimpulse von der Aussendung durch die Beleuchtungseinrichtung 1 bis zum Empfang durch den Bildgeber 2 für mindestens einen Bildpunkt. Vorzugsweise wird die Laufzeit jedes Lichtimpulses von der Aussendung bis zum Empfang für jeden Bildpunkt ermittelt, um so ein Laufzeitprofil des gesamten zu überwachenden Raumbereichs 3 zu erhalten. In der dargestellten Situation bei freiem zu überwachenden Raumbereich 3 können Referenzwerte der Lichtlaufzeiten ermittelt werden, die in einem geeigneten Speicher (nicht gezeigt) zum späteren Vergleich mit aktuell ermittelten Lichtlaufzeiten gespeichert werden.

Wenn sich nun dem zu überwachenden Raumbereich 3 ein Objekt befindet, wird der Weg der Lichtstrahlen und damit auch ihre Laufzeit verändert. Die Zeitmeßeinheit ermittelt die Laufzeit der Lichtimpulse von der Aussendung durch die Beleuchtungseinrichtung 1 bis zum Empfang durch den Bildgeber 2 für mindestens einen Bildpunkt und vergleicht diese aktuell ermittelten Lichtlaufzeiten mit den gespeicherten Referenzwerten. Wenn die Zeitmeßeinheit Abweichungen zwischen den aktuell ermittelten Lichtlaufzeiten und den gespeicherten Referenzwerten feststellt, kann das optoelektronische Überwachungssystem ein entsprechendes Überwachungssignal ausgeben.

Alternativ können die Referenzwerte der Lichtlaufzeiten auch ermittelt werden, wenn die in dem zu überwachenden Raumbereich 3 vorhandenen Objekte eine vorgegebene Position einnehmen. Wenn die aktuell ermittelten Lichtlaufzeiten gegenüber derart ermittelten Referenzwerten abweichen, ist dies ein Hinweis darauf, daß die in dem zu überwachenden Raumbereich 3 befindlichen Objekte ihre vorgegebene Position verändert haben, und das optoelektronische Überwachungssystem gibt ein entsprechendes Überwachungssignal aus.

Da ein Objekt in jeder beliebigen räumlichen Position innerhalb des überwachten Raumbereichs 3 eine Veränderung der Lichtlaufzeiten verursacht, bietet das optoelektronische Überwachungssystem gemäß der vorliegenden Erfindung die Möglichkeit, nicht nur den Boden 5, den bodennahen Bereich oder die Seitenwände 6, sondern darüberhinaus auch den gesamten Raum des überwachten Raumbereichs 3 zu kontrollieren.

Das Funktionsprinzip des erfindungsgemäßen optoelektronischen Überwachungssystems läßt es ferner zu, daß die Beleuchtungseinrichtung 1 und der Bildgeber 2 in derselben Richtung auf den zu überwachenden Raumbereich ausgerichtet sind. Nach einer bevorzugten Ausführungsform können deshalb die Beleuchtungseinrichtung 1 und der Bildgeber 2 gemeinsam in einem Gehäuse untergebracht sein. Auf diese Weise sind keine Verbindungsleitungen zwischen der Beleuchtungseinrichtung 1 und dem Bildgeber 2 erforderlich. Der Platzbedarf des erfindungsgemäßen Überwachungssystems ist dadurch verringert und die Installation vereinfacht, während die Zuverlässigkeit der Überprüfung eines zu überwachenden Raumbereichs verbessert ist.

### Bezugszeichenliste

- 1: Beleuchtungseinrichtung
- 2: Bildgeber
- 3: überwachter Raumbereich
- 4: Projektion der Lichtstrahlen
- 5: Boden des überwachten Raumbereichs 3
- 6: Seitenwand des überwachten Raumbereichs 3

## Patentansprüche

1. Optoelektronisches Überwachungssystem zur Erfassung eines Boden- und Seitenwände aufweisenden, zu überwachenden Raumbereich (3), mit einer Boden- und Seitenwände beleuchtenden Beleuchtungseinrichtung (1), mindestens einem Bildgeber (2), der ein in eine Anzahl von Bildpunkten aufgelöstes Bild aus dem Raumbereich (3) erfasst und einer Auswerteeinheit, die vom Bildgeber (2) abgegebenen Empfangssignale mit einer Referenz vergleicht, *die bei* freiem, zu überwachenden Raumbereich (3) oder zu überwachendem Raumbereich, in dem sich *darin* befindliche Objekte eine vorgegebene Position einnehmen, *gebildet wird,* und bei einer Abweichung ein Überwachungssignal abgibt,
**dadurch gekennzeichnet,**
**dass** die Beleuchtungseinheit Lichtimpulse aussendet und
**dass** die Auswerteeinheit eine Zeitmesseinheit ist, die die Laufzeit des Lichtimpulses von der Aussendung durch die Beleuchtungseinrichtung (1) bis zum Empfang durch den Bildgeber (2) für mindestens einen Bildpunkt ermittelt, mit dem diesem Bildpunkt zugeordneten, vorher gebildeten Referenzwert vergleicht und nur dann das Überwachungssignal abgibt, wenn ein Toleranzbereich überschritten ist, wobei der Pulsbetrieb der Beleuchtungseinrichtung (1) mit dem Bildgeber (2) synchronisiert ist.

2. Optoelektronisches Überwachungssystem nach Anspruch 1
**dadurch gekennzeichnet,**
**daß** die Zeitmeßeinheit die Laufzeit jedes Lichtimpulses von der Aussendung bis zum Empfang für jeden Bildpunkt ermittelt, um so ein Laufzeitprofil des gesamten zu überwachenden Raumbereichs (3) zu erzeugen.

3. Optoelektronisches Überwachungssystem nach einem der vorangehenden Ansprüche
**dadurch gekennzeichnet,**
**daß** die Beleuchtungseinrichtung (1) eine Laserlichtquelle ist.

4. Optoelektronisches Überwachungssystem nach einem der vorangehenden Ansprüche
**gekennzeichnet durch**
eine optische Ablenkeinheit, die den von der Beleuchtungseinrichtung (1) erzeugten Lichtstrahl insbesondere periodisch ablenkt.

5. Optoelektronisches Überwachungssystem nach Anspruch 4
**dadurch gekennzeichnet,**
**daß** die optische Ablenkeinheit, den von der Beleuchtungseinrichtung (1) erzeugten Lichtstrahl insbesondere in zwei zueinander senkrecht stehenden Ebenen ablenkt.

6. Optoelektronisches Überwachungssystem nach einem der vorangehenden Ansprüche
**dadurch gekennzeichnet,**
**daß** die Beleuchtungseinrichtung (1) den zu überwachenden Raum (3) nur in einem bestimmten Raumwinkelbereich beleuchtet.

7. Optoelektronisches Überwachungssystem nach einem der vorangehenden Ansprüche
**dadurch gekennzeichnet,**
**daß** der Bildgeber (2) einen optischen Bandpaßfilter aufweist, der auf die Wellenlänge des von der Beleuchtungseinrichtung (1) erzeugten Lichtes abgestimmt ist.

8. Optoelektronisches Überwachungssystem nach einem der vorangehenden Ansprüche
**dadurch gekennzeichnet,**
**daß** der Bildgeber (2) eine digitale Kamera ist, die eine Anzahl von in einer Matrix angeordneten Halbleitersensoren, wie z.B. Fotodioden-, CCD- oder CID-Matrizen, aufweist.

9. Optoelektronisches Überwachungssystem nach einem der vorangehenden Ansprüche
**dadurch gekennzeichnet,**
**daß** die Zeitmeßeinheit die Laufzeiten jedes Lichtimpulses für eine Anzahl von Bildpunkten des vom Bildgeber (2) empfangenen Bildes addiert und mit der Summe der Referenzwerte für die entsprechenden Bildpunkte vergleicht.

10. Optoelektronisches Überwachungssystem nach einem der vorangehenden Ansprüche
**dadurch gekennzeichnet,**
**daß** die Referenzwerte der Laufzeit der Lichtimpulse von der Aussendung bis zum Empfang bei freiem zu überwachenden Raumbereich (3) entsprechen.

11. Optoelektronisches Überwachungssystem nach einem der vorangehenden Ansprüche
**dadurch gekennzeichnet,**
**daß** die Referenzwerte der Laufzeit der Lichtimpulse von der Aussendung bis zum Empfang entsprechen, wobei in dem zu überwachenden Raumbereich (3) befindliche Objekte eine vorgegebene Position einnehmen.

12. Optoelektronisches Überwachungssystem nach einem der vorangehenden Ansprüche
**dadurch gekennzeichnet,**
**daß** der Bildgeber (2) und die Beleuchtungseinrichtung (1) in derselben Richtung auf den zu überwachenden Raumbereich (3) ausgerichtet sind.

13. Optoelektronisches Überwachungssystem nach einem der vorangehenden Ansprüche
**dadurch gekennzeichnet,**
**daß** der Bildgeber (2) und die Beleuchtungseinrichtung (1) gemeinsam in einem Gehäuse untergebracht sind.

## Claims

1. An optoelectronic monitoring system for the detection of a spatial region (3) to be monitored having a base and side walls, comprising a lighting device (1) illuminating the base and side walls, at least one imager (2) which detects an image from the spatial region (3) resolved into a number of picture elements and an evaluation unit which compares the received signals transmitted by the imager (2) with a reference which is formed when a spatial region (3) to be monitored is free or with a spatial region to be monitored in which objects located therein adopt a pre-determined position, with the evaluation unit emitting a monitoring signal on a deviation, **characterised in that**
the lighting unit transmits light pulses; and
**in that** the evaluation unit is a time measuring unit which determines the transit time of the light pulse from the transmission by the lighting device (1) up to the reception by the imager (2) for at least one picture element, compares it with the previously formed reference value associated with this picture element and only emits the monitoring signal when a tolerance range has been exceeded, with the pulsed operation of the lighting device (1) being synchronised with the imager (2).

2. An optoelectronic monitoring system in accordance with claim 1, **characterised in that** the time measuring unit determines the transit time of each light pulse from the transmission up to the reception for each picture element in order thus to generate a transit time profile of the total spatial region (3) to be monitored.

3. An optoelectronic monitoring system in accordance with any one of the preceding claims, **characterised in that** the lighting device (1) is a laser light source.

4. An optoelectronic monitoring system in accordance with any one of the preceding claims, **characterised by** an optical deflection unit which deflects, in particular periodically deflects, the light beam generated by the lighting device (1).

5. An optoelectronic monitoring system in accordance with claim 4, **characterised in that** the optical deflection unit deflects the light beam generated by the lighting device (1) in particular into two planes perpendicular to one another.

6. An optoelectronic monitoring system in accordance with any one of the preceding claims, **characterised in that** the lighting device (1) illuminates the space (3) to be monitored only in a specific solid angle range.

7. An optoelectronic monitoring system in accordance with any one of the preceding claims, **characterised in that** the imager (2) has an optical band pass filter which is matched to the wavelength of the light generated by the lighting device (1).

8. An optoelectronic monitoring system in accordance with any one of the preceding claims, **characterised in that** the imager (2) is a digital camera which has a number of semiconductor sensors such as photodiode matrices, CCD matrices or CID matrices arranged in a matrix.

9. An optoelectronic monitoring system in accordance with any one of the preceding claims, **characterised in that** the time measuring unit adds the transit times of each light pulse for a number of picture elements of the image received by the imager (2) and compares it with the sum of the reference values for the corresponding picture elements.

10. An optoelectronic monitoring system in accordance with any one of the preceding claims, **characterised in that** the reference values correspond to the transit time of the light pulses from the transmission up to the reception, when the spatial region (3) to be monitored is free.

11. An optoelectronic monitoring system in accordance with any one of the preceding claims, **characterised in that** the reference values correspond to the transit time of the light pulses from the transmission up to the reception, with objects located in the spatial region (3) to be monitored adopting a pre-determined position.

12. An optoelectronic monitoring system in accordance with any one of the preceding claims, **characterised in that** the imager (2) and the lighting device (1) are aligned in the same direction to the spatial region (3) to be monitored.

13. An optoelectronic monitoring system in accordance with any one of the preceding claims, **characterised in that** the imager (2) and the lighting device (1) are jointly accommodated in a housing.

## Revendications

1. Système de surveillance optoélectronique pour la couverture d'un espace (3) à surveiller présentant des sols et murs latéraux, avec un dispositif d'éclairage (1) éclairant le sol et les murs latéraux, au moins un générateur d'image (2) qui saisit une image dans l'espace (3) laquelle est restituée en un certain nombre de points d'images, et avec une unité d'évaluation, laquelle compare des signaux de réception émis par le générateur d'image (2) avec une référence, laquelle référence est formée avec un espace (3) à surveiller libre, ou avec un espace à surveiller dans lequel des objets qui s'y trouvent adoptent une position prédéfinie, et qui émet un signal de surveillance en cas de différence, **caractérisé en ce que** le dispositif d'éclairage émet des impulsions lumineuses et **en ce que** l'unité d'évaluation est une unité de mesure des temps, laquelle détermine la durée de parcours de l'impulsion lumineuse depuis l'émission par le dispositif d'éclairage (1) jusqu'à la réception par le générateur d'image (2) pour au moins un point d'image, et la compare avec la valeur de référence préalablement formée et associée à ce point d'image, et émet le signal de surveillance seulement si une plage de tolérance est dépassée, moyennant quoi le fonctionnement impulsionnel du dispositif d'éclairage (1) est synchronisé avec le générateur d'image (2).

2. Système de surveillance optoélectronique selon la revendication 1, **caractérisé en ce que** l'unité de mesure des temps détermine la durée de parcours de chaque impulsion lumineuse, depuis l'émission jusqu'à la réception, pour chaque point d'image, afin de générer de la sorte un profil de durée de parcours de l'ensemble de l'espace (3) à surveiller.

3. Système de surveillance optoélectronique selon l'une des revendications précédentes, **caractérisé en ce que** le dispositif d'éclairage (1) est une source de lumière laser.

4. Système de surveillance optoélectronique selon l'une des revendications précédentes, **caractérisé en ce qu'**une unité de déviation optique dévie en particulier de manière périodique le rayon lumineux généré par le dispositif d'éclairage (1).

5. Système de surveillance optoélectronique selon la revendication 4, **caractérisé en ce que** l'unité de déviation optique dévie le rayon lumineux généré par le dispositif d'éclairage (1) particulièrement dans deux plans perpendiculaires l'un par rapport à l'autre.

6. Système de surveillance optoélectronique selon l'une des revendications précédentes, **caractérisé en ce que** le dispositif d'éclairage (1) éclaire l'espace (3) à surveiller seulement dans une zone angulaire définie.

7. Système de surveillance optoélectronique selon l'une des revendications précédentes, **caractérisé en ce que** le générateur d'image (2) présente un filtre passe-bande optique, lequel est ajusté à la longueur d'onde de la lumière générée par le dispositif d'éclairage (1).

8. Système de surveillance optoélectronique selon l'une des revendications précédentes, **caractérisé en ce que** le générateur d'image (2) est une caméra numérique, laquelle présente un certain nombre de générateurs à semiconducteur disposés en une matrice, tels par exemple des matrices à photodiodes, à CCD ou à CID.

9. Système de surveillance optoélectronique selon l'une des revendications précédentes, **caractérisé en ce que** l'unité de mesure des temps additionne les durées de parcours de chaque impulsion lumineuse pour un certain nombre de points d'image de l'image réceptionnée par le générateur d'image (2), et compare cela avec la somme des valeurs de référence pour les points d'image correspondants.

10. Système de surveillance optoélectronique selon l'une des revendications précédentes, **caractérisé en ce que** les valeurs de référence correspondent à la durée de parcours des impulsions lumineuses depuis l'émission jusqu'à la réception lorsque l'espace (3) à surveiller est libre.

11. Système de surveillance optoélectronique selon l'une des revendications précédentes, **caractérisé en ce que** les valeurs de référence correspondent à la durée de parcours des impulsions lumineuses depuis l'émission jusqu'à la réception, moyennant quoi des objets se trouvant dans l'espace (3) à surveiller adoptent une position prédéfinie.

12. Système de surveillance optoélectronique selon l'une des revendications précédentes, **caractérisé en ce que** le générateur d'image (2) et le dispositif d'éclairage (1) sont orientés dans la même direction vers l'espace (3) à surveiller.

13. Dispositif de surveillance optoélectronique selon l'une des revendications précédentes, **caractérisé en ce que** le générateur d'image (2) et le dispositif d'éclairage (1) sont logés ensemble dans un boîtier.
